# EUROPÄISCHE PATENTSCHRIFT

(11) **EP 1 147 651 B1**
(45) Veröffentlichungstag und Bekanntmachung des Hinweises auf die Patenterteilung: **07.01.2009**
(21) Anmeldenummer: 99963224.3
(22) Anmeldetag: 12.11.1999
(51) Int. Cl.: H04M 1/725

(54) **TELEKOMMUNIKATIONSENDGERÄT MIT ZEICHENERKENNUNG**
TELECOMMUNICATIONS TERMINAL WITH CHARACTER RECOGNITION
TERMINAL DE TELECOMMUNICATIONS A RECONNAISSANCE DE CARACTERES

(30) Priorität: 07.12.1998 DE 19856296
(43) Veröffentlichungstag der Anmeldung: 24.10.2001
(73) Patentinhaber: IPCom GmbH & Co. KG, 82049 Pullach (DE)
(72) Erfinder: HASEMANN, Joerg-Michael, D-27339 Riede (DE)
(74) Vertreter: Gigerich, Jan
(86) Internationale Anmeldenummer: PCT/DE1999/003611
(87) Internationale Veröffentlichungsnummer: WO 2000/035169

(56) Entgegenhaltungen:
- EP-A- 0 439 340
- WO-A-95/10818
- GB-A- 2 306 669
- US-A- 5 111 004
- US-A- 5 247 137
- PATENT ABSTRACTS OF JAPAN vol. 097, no. 009, 30. September 1997 (1997-09-30) & JP 09 130507 A (BROTHER IND LTD), 16. Mai 1997 (1997-05-16)

## Beschreibung

### Stand der Technik

Die Erfindung geht aus von einem Telekommunikationsendgerät mit Informationseingabeeinrichtungen nach der Gattung des Hauptanspruchs.

Es sind allgemein Telekommunikationsendgeräte, insbesondere Mobiltelefone, bekannt, die an ihren Gehäuseaußenflächen Tasten, insbesondere alphanumerische Tastaturen, tragen.

Aus EP 439 340 A2 ist ein Mobiltelefon bekannt, das einen Telefonnummerngenerator und einen Telefonnummernsendeapparat umfasst, die vorzugsweise in einem bleistiftähnlichen Gehäuse untergebracht sind. Der Telefonnummerngenerator erzeugt ein Telefonnummernsignal z.B. durch Erkennen einer Ballbewegung, die am unteren Ende des Gehäuses befestigt ist. Der Ball wird bewegt, um eine Telefonnummer auf der Oberfläche eines Artikels zu schreiben.

Aus GB 2 306 669 ist ein manuelles Eingabesystem bekannt, für interaktive Papier- und elektronische Dokumentenbearbeitung. Es benutzt ein stiftförmiges Gerät, mit Schreibspitze zum Markieren vorgegebener Einträge auf einem physischen Dokument. Weiter benutzt es Sensoren zur Erfassung der dreidimensionalen Kräfte, die auf die Schreibspitze einwirken wie auch deren durch das Schreiben erzeugte Bewegung.

WO95/10818 beschreibt ein Dateneingabesystem mit einem Handgerät. Das Handgerät hat einen Lesesensor, um Kommandos und/oder Daten zu lesen. Darüber hinaus hat es einen überschreibbaren Speicher, um Informationen über ausgewählte Artikel zu speichern. Neben einem Mikroprozessor und einem Display hat es ein Telekommunikationsinterface zur telefonischen Übertragung von Informationen, die ausgewählten Artikeln zugeordnet sind. Auf diese Weise werden die ausgewählten Artikel einem fernen Rechenzentrum mitgeteilt.

### Vorteile der Erfindung

Das erfindungsgemäße Telekommunikationsendgerät mit den Merkmalen des Hauptanspruchs hat demgegenüber den Vorteil, dass Informationen zur Steuerung des Telekommunikationsendgerätes mittels Drucksensorelementen eingebbar sind und somit Tasten zur Informationseingabe zumindest teilweise entfallen können. Dadurch wird eine kleinere Bauform des Telekommunikationsendgerätes ermöglicht. Weiterhin werden durch die Einsparung von Tasten zur Informationseingabe Kosten eingespart und der Herstellungsaufwand vereinfacht. Außerdem wird dadurch das Gewicht des Telekommunikationsendgerätes reduziert. Besonders vorteilhaft ist, dass eine Zeichenerkennungseinheit, insbesondere zur Erkennung von alphanumerischen Zeichen, vorgesehen ist, die im Zusammenwirken mit den Drucksensorelementen die Eingabe von beliebigen Textzeichen ermöglicht.

Durch die in den Unteransprüchen aufgeführten Maßnahmen sind vorteilhafte Weiterbildungen und Verbesserungen des im

Hauptanspruch angegebenen Telekommunikationsendgerätes möglich.

Weiterhin ist es von Vorteil, daß das Telekommunikationsendgerät eine Sendevorrichtung umfaßt, aber die Signale in Abhängigkeit der Zeicheninformationen absetzbar sind. Dadurch wird eine den Schreibgewohnheiten eines Benutzers angepaßte und eine Protokollierung von über einen Schreibvorgang in das Telekommunikationsendgerät eingegebenen Zeichen ermöglicht.

Weiterhin ist von Vorteil, daß das Telekommunikationsendgerät Wiedergabeeinrichtungen und Quittierungseinrichtungen umfaßt. Dadurch sind Zeichen, die mittels des Drucksensorelementes und der Zeichenerkennungseinheit eingegeben wurden, korrigierbar und ein Benutzer kann sich zur Korrektur der eingegebenen Informationen beispielsweise auf die Korrektur eines falsch eingegebenen Zeichens beschränken.

Weiterhin ist von Vorteil, daß das Druckaufnahmeelement als Schreibspitze ausgebildet ist, so daß die Eingabe bei einem Schreibvorgang automatisch erfolgt.

Es ist außerdem von Vorteil, daß Eingabe- und Bedienfunktionen des Telekommunikationsendgerätes in Abhängigkeit der Zeicheninformationen, insbesondere menügesteuert aktivierbar sind. Dadurch ist eine einfache und intuitive Nutzung sämtlicher Funktionalitäten des Telekommunikationsendgerätes möglich.

Weiterhin ist es von Vorteil, daß in Abhängigkeit der eingegebenen Zeicheninformationen ein Speichermodus aktivierbar ist, der zur Eintragung beispielsweise von Telefonbuch- oder Notizbucheintragungen in einen Speicher des Telekommunikationsendgerätes vorgesehen ist. Dadurch ergeben sich vorteilhafte zusätzliche Nutzungsmöglichkeiten des Telekommunikationsendgerätes, insbesondere als Adreßbuch und/oder Terminkalender.

Es ist weiterhin von Vorteil, einen Rechnermodus vorzusehen, wodurch das Telekommunikationsendgerät zur Ausführung von Rechenoperationen nutzbar ist.

Darüber hinaus ist es von Vorteil, einen Weckermodus aktivierbar und betreibbar vorzusehen, so dass das Telekommunikationsendgerät als Wecker nutzbar ist.

Schließlich ist es von Vorteil, eine Datenschnittstelle, insbesondere Infrarotschnittstelle, am Telekommunikationsendgerät vorzusehen wodurch Daten, beispielsweise mit anderen Telekommunikationsendgeräten oder auch einer Datenverarbeitungsanlage, austauschbar sind.

### Zeichnung

Ein Ausführungsbeispiel der Erfindung ist in der Zeichnung dargestellt und in der nachfolgenden Beschreibung näher erläutert. Es zeigen
Figur 1 ein Blockschaltbild eines Telekommunikationsendgerätes,
Figur 2 eine perspektivische Darstellung des Telekommunikationsendgerätes,
Figur 3 eine Aufsicht einer zweiten Ausführungsform eines Druckaufnahmeelementes,
Figur 4 eine Seitenansicht der zweiten Ausführungsform des Druckaufnahmeelementes entlang der Schnittlinie A-B aus Figur 3,
Figur 5 ein Ablaufdiagramm zur Zeichenerkennung und
Figur 6 ein Blockschaltbild einer Zeichenerkennungseinheit.

### Beschreibung des Ausführungsbeispiels

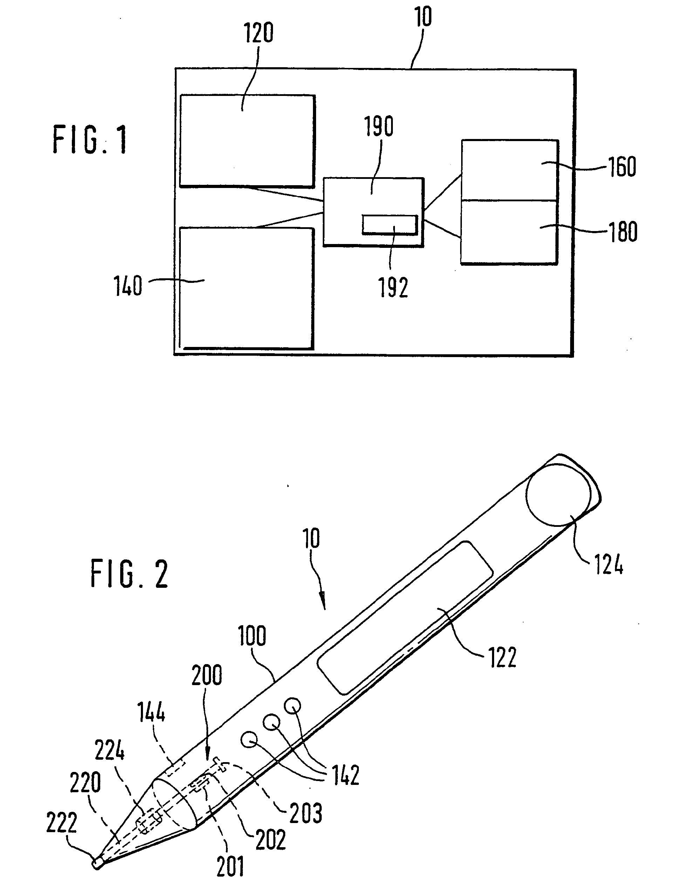

In Figur 1 ist ein Blockschaltbild eines Telekommunikationsendgerätes 10 dargestellt. Das Telekommunikationsendgerät 10 kann schnurgebunden oder schnurlos ausgebildet sein. Bei Ausbildung als schnurloses Telekommunikationsendgerät kann es sich um ein Mobiltelefon, ein Schnurlostelefon oder dergleichen handeln. Das Telekommunikationsendgerät 10 umfaßt Informationseingabeeinrichtungen 140 und Wiedergabeeinrichtungen 120, die beide mit einer Steuereinrichtung 190 verbunden sind. Weiterhin umfaßt das Telekommunikationsendgerät 10 eine Sendevorrichtung 160 und eine Empfangsvorrichtung 180, die ebenfalls beide mit der Steuereinrichtung 190 verbunden sind. In einer vorteilhaften Ausführungsform des Telekommunikationsendgerätes 10 ist eine Datenschnittstelle vorgesehen, die den Austausch von Daten zwischen dem Telekommunikationsendgerät 10 und einem weiteren Gerät, beispielsweise einem zweiten Telekommunikationsendgerät 10 oder auch einer Datenverarbeitungsanlage, erlaubt. Die Datenschnittstelle ist nicht eigens dargestellt, aber die Sendevorrichtung 160 umfaßt den Teilbereich der Datenschnittstelle zum Senden von Daten, und die Empfangsvorrichtung 180 umfaßt den Teilbereich der Datenschnittstelle zum Empfangen von Daten. Der Steuereinrichtung 190 ist ein Speicher 192 zugeordnet.

In Figur 2 ist das Telekommunikationsendgerät 10 in perspektivischer Darstellung dargestellt. Das Telekommunikationsendgerät 10 umfaßt ein Gehäuse 100 und ein Druckaufnahmeelement 220. Im Ausführungsbeispiel umfaßt das Telekommunikationsendgerät 10 ein erstes Drucksensorelement 201, ein zweites Drucksensorelement 202 und ein drittes Drucksensorelement 203. Bewegungen, die mit dem Telekommunikationsendgerät 10 auf einer Oberfläche ausgeführt werden, wobei das Druckaufnahmeelement 220 wenigstens zeitweise die Oberfläche berührt, sind von den Drucksensorelementen 201, 202, 203 detektierbar. Dabei überträgt das Druckaufnahmeelement 220 die von der Oberfläche ausgeübten Kräfte an die Drucksensorelemente 201, 202, 203. Die Drucksensorelemente 201, 202, 203 sind insbesondere derart angeordnet, daß das Druckaufnahmeelement 220 jeweils eine Komponente der Bewegung auf eines der Drucksensorelemente 201, 202, 203 überträgt.
Das erste Drucksensorelement 201 und das zweite Drucksensorelement 202 sind beispielsweise seitlich des Druckaufnahmeelementes 220 um etwa 90° versetzt angeordnet und das dritte Drucksensorelement 203 ist an einem ersten Ende des Druckaufnahmeelementes 220 angeordnet. Dadurch werden Bewegungen auf einer Oberfläche, beispielsweise auf einem Blatt Papier, derart detektierbar, daß eine Bewegung des Telekommunikationsendgerätes 10 in eine erste Bewegungsrichtung auf der Oberfläche entweder ausschließlich durch das erste Drucksensorelement 201 oder in einem ersten Verhältnis durch das erste und das zweite Drucksensorelement 201, 202 detektierbar ist, daß eine Bewegung des Telekommunikationsendgerätes 10 in eine zweite Bewegungsrichtung, die gegenüber der ersten Bewegungsrichtung um einen Winkel, insbesondere von 90°, gedreht ist, entweder ausschließlich durch das zweite Drucksensorelement 202 oder in einem zweiten Verhältnis durch das erste und das zweite Drucksensorelement 201, 202 detektierbar ist. Eine Andrückbewegung des Telekommunikationsendgerätes 10 auf der Oberfläche ist durch das dritte Drucksensorelement 203 detektierbar.

In Figur 2 ist beispielhaft eine erste Ausführungsform des Druckaufnahmeelementes 220 dargestellt. Ein zweites, dem ersten Ende gegenüberliegendes Ende des Druckaufnahmeelementes 220 ist als Schreibspitze 222 , beispielsweise in Form einer Kugelschreiberspitze oder dgl., ausgeführt und gestattet es, die Bewegungen aufzuzeichnen, die das Telekommunikationsendgerät 10 in Form beispielsweise eines Schriftbildes auf der Oberfläche ausführt. Ein geschriebenes Zeichen ist dann auf der Oberfläche, insbesondere einer Papieroberfläche oder dgl., sichtbar, was eine sichere und kontrollierte Informationseingabe ermöglicht.
In einer vorteilhaften Auführungsform des Telekommunikationsendgerätes 10 umfaßt das Druckaufnahmeelement 220 ein Reservoir insbesondere zur Aufnahme einer Schreibflüssigkeit oder dgl.
Mittels einer Aufnahme 224 wird das Druckaufnahmeelement 220 im Gehäuse 100 des Telekommunikationsendgerätes 10 arretiert. An einem zweiten Ende des Druckaufnahmeelementes 220 nehmen die Drucksensorelemente 201, 202, 203 die an der Schreibspitze 222 angreifenden und von dem Druckaufnahmeelement 220 übertragenen Kräfte auf.
Im Ausführungsbeispiel ist das Telekommunikationsendgerät 10 beispielhaft als Kugelschreiber, Stift oder dgl. ausgebildet. Das Druckaufnahmeelement kann aus einer Schreibmine, insbesondere für Kugelschreiber, Filzstifte und dgl., mit einer Spitze, die die Funktion der Schreibspitze 222 erfüllt, bestehen. Die Eingabe von Informationen über die Drucksensorelemente 201, 202, 203 in das Telekommunikationsendgerät 10 erfolgt gemäß der beispielhaft beschriebenen Ausführungsform dadurch, daß ein Benutzer das Telekommunikationsendgerät 10 wie ein Kugelschreiber zum Schreiben hält und, beispielsweise auf einer Papieroberfläche oder dgl., Zeichen schreibt. Die Bewegungen, die das Telekommunikationsendgerät durch das Schreiben auf der Oberfläche ausführt, werden detektiert und in der beschriebenen Weise zur Informationseingabe benutzt. Es ist somit möglich, durch Schreiben von unmittelbar einprägsamen Steuerbefehlen, beispielsweise "Ruf 12345", "Telefonbuch Peter: 12345", "Ruf Peter" oder dgl., das Telekommunikationsendgerät 10 zu steuern.

Die Wiedergabeeinrichtungen 120 umfassen ein Anzeigeelement 122, beispielsweise ein LCD-Display, und eine Hörkapsel 124. Die Eingabeeinrichtungen 140 umfassen Quittierungseinrichtungen 142, insbesondere Tasten, und ein Mikrophon 144.

Die Wiedergabeeinrichtungen 120 und die Eingabeeinrichtungen 140 sind insbesondere so angeordnet, daß eine leichte und einfache Bedienung des Telekommunikationsendgerätes 10, einerseits im Hinblick auf die Informationseingabe in das Telekommunikationsengerätes 10 durch Zeichenerkennung und andererseits im Hinblick auf andere Benutzungsmöglichkeiten des Telekommunikationsendgerätes 10 beispielsweise zur Telekommunikation, möglich ist. Dazu sind im Ausführungsbeispiel die Quittierungseinrichtungen 142 in einem Bereich zwischen dem Druckaufnahmeelement 220 und dem Anzeigeelement 122 angebracht, so daß sie durch den Benutzer leicht zur Korrektur der Informationseingabe verwendet werden können. Weiterhin ist das Mikrophon 144 im Ausführungsbeispiel beispielhaft im Bereich des Druckaufnahmeelementes 220 und die Hörkapsel 124 am entgegengesetzen Ende des Telekommunikationsendgerätes 10 angeordnet, so daß eine Benutzung des Telekommunikationsendgerätes 10 als Telefon erleichtert wird, weil Mund und Ohr des Benutzer leicht in die Nähe der entsprechenden Eingabe- und Wiedergabeeinrichtungen gebracht werden können.

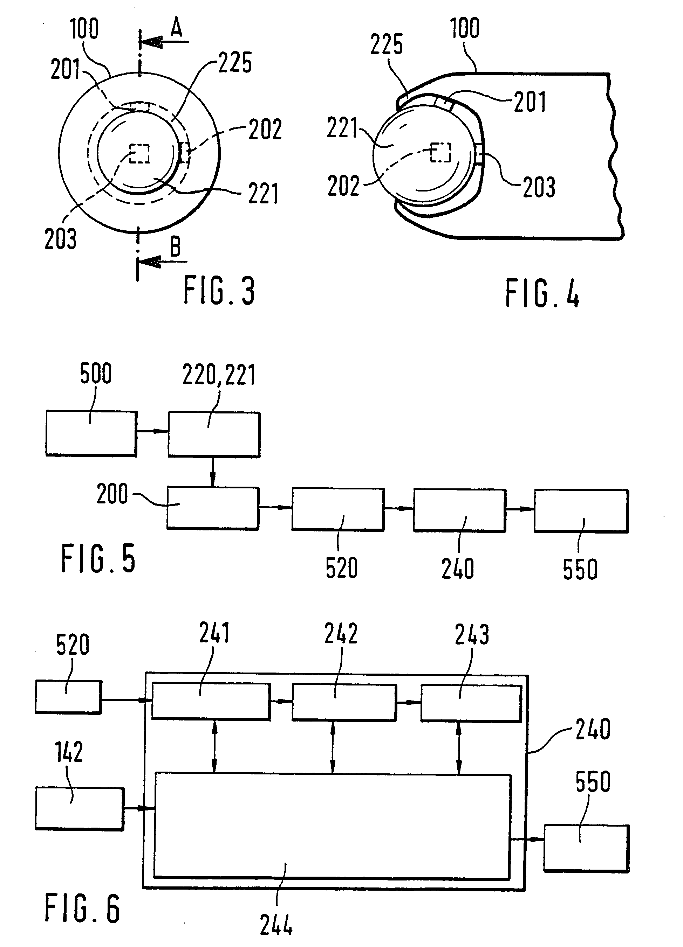

In Figur 3 ist das Telekommunikationsendgerät in Aufsicht und in Figur 4 in einer Schnittdarstellung entlang der Schnittlinie AB in Figur 3 dargestellt. Das Druckaufnahmeelement 221 ist in Figur 3 und 4 in einer zweiten Ausführungsform als Kugel ausgeführt. Eine zweite Ausführungsform der Aufnahme 225 arretiert das Druckaufnahmeelement 221 im Gehäuse 100. Im Falle einer Bewegung des Telekommunikationsendgerätes 10 auf einer Oberfläche, wobei das Druckaufnahmeelement 221 die Oberfläche berührt, übt die Oberfläche auf das Druckaufnahmeelement 221 eine Kraftwirkung aus, die vom Druckaufnahmeelement 221 an die Drucksensorelemente 201, 202, 203 weitergegeben wird. Die Anordnung der Drucksensorelemente 201, 202, 203 bewirkt, daß diese jeweils die Kraft bzw. Druckinformation aufnehmen, die zu einer Komponente der Bewegung gehören, ähnlich wie anhand der Figur 2 beschrieben.

Das Telekommunikationsendgerät 10 ist nicht zwangsläufig kugelschreiberförmig bzw. stiftförmig ausgebildet. Beispielsweise kann auch ein Telekommunikationsendgerät 10 in Form eines mobilen Telefons (Handy) vorgesehen sein, wobei, insbesondere an einer Ecke, Rundung oder dgl. des mobilen Telefons, das Druckaufnahmeelement 220, 221 angeordnet ist. Das Druckaufnahmeelement 220, 221 kann beispielsweise ausfahrbar ausgeführt sein, so daß die Schreibflüssigkeit nur bei Informationseingabe in das Telekommunikationsendgerät 10 mittels der Druchsensorelemente 201, 202, 203 aus dem Druckaufnahmeelement 220, 221 austreten kann. Weiterhin kann das Druckaufnahmeelement 220, 221 auch fest angeordnet sein und entweder offen am Telekommunikationsendgerät 10 oder durch eine Abdeckvorrichtung abdeckbar ausgeführt sein.

Figur 5 stellt einen Ablaufplan zur Zeichenerkennung im Telekommunikationsendgerät 10 dar. Die durch die Bewegungen des Telekommunikationsendgerätes 10 auf der Oberfläche hervorgerufenen Kraftwirkungen auf das Druckaufnahmeelement 220, 221 werden von dem Druckaufnahmeelement 220, 221 auf die Drucksensorelemente 220 übertragen. Die Drucksensorelemente 201, 202, 203 wandeln die Kraftinformationen 500 in Signale 520, insbesondere elektrische Signale, um. Die Drucksensorelemente 201, 202, 203, die mit einer Zeichenerkennungseinheit 240 verbunden sind, leiten die Signale 520 zur Zeichenerkennungseinheit 240 weiter, die die Signale 520 in Zeicheninformationen 550 umsetzt.

In Figur 6 ist ein Blockschaltbild zur Umsetzung der Signalinformationen 520 in Zeicheninformationen 550 dargestellt. Die Zeichenerkennungseinheit 240 umfaßt eine Digitalanalogwandlungseinheit 241, die mit einer Zentraleinheit 244 verbunden ist. Mit der Zentraleinheit ist sowohl eine Standardisierungseinheit 242 als auch eine Erkennungseinheit 243 verbunden.
Weiterhin ist die Zentraleinheit 244 mit den Quittierungseinrichtungen 142 verbunden.

Nach der Durchführung einer Bewegung des Telekommunikationsendgerätes 10 auf der Oberfläche werden die von der Zeichenerkennungseinheit 240 empfangenen Signale 520 zunächst in der Analogdigitalwandlungseinheit 241 digitalisiert, wobei erste Daten erzeugt werden. Die Standardisierungseinheit 242 enthält zweite Daten, die den zu erkennenden Zeichen entsprechen und die mit den ersten Daten in der Erkennungseinheit 243 verglichen werden, wobei in Abhängigkeit der Signalinformation 520 ein wahrscheinlichstes erstes Zeichen aus einer Menge von möglichen ersten Zeichen gewählt wird. Das wahrscheinlichste erste Zeichen wird als Zeicheninformation 550 von der Zeichenerkennungseinheit 240 der Steuerungseinheit 190 des Telekommunikationsendgerätes 10 zur Verfügung gestellt.

Bei einer vorteilhaften Weiterbildung des Telekommunikationsendgerätes 10 sind die zweiten Daten änderbar bzw. erweiterbar, so daß zum einen erste Zeichen aus der Menge der möglichen ersten Zeichen durch frei wählbare erste Zeichen ersetzt und/oder zum anderen freiwählbare erste Zeichen zu der Menge der möglichen ersten Zeichen hinzugefügt werden können.

Durch die Quittierungseinrichtungen 142 ist es möglich, auf die Erkennung der ersten Zeichen in der Erkennungseinheit 243 Einfluß zu nehmen. Mit einer ersten Korrekturmöglichkeit kann ein fälschlich erkanntes erstes Zeichen durch ein zweites Zeichen aus der Menge der möglichen ersten Zeichen ersetzt werden. Mit einer zweiten Korrekturmöglichkeit kann, gegebenenfalls nach wiederholter aber fruchtloser Anwendung der ersten Korrekturmöglichkeit, ein zu erkennendes drittes Zeichen vollständig neu eingegeben werden, indem mit dem Telekommunikationsendgerät eine dem dritten Zeichen entsprechende Bewegung auf der Oberfläche ausgeführt wird.

Die mittels der Zeichenerkennungseinheit 240 erkannten Zeicheninformationen 550 werden an die Steuereinheit 190 zur Steuerung des Telekommunikationsendgerätes 10 geleitet.

In Abhängigkeit der Zeicheninformationen 550 aktiviert die Steuereinheit die Wiedergabeeinrichtungen 120, die Sendevorrichtung 160 und/oder die Empfangsvorrichtung 180.

Als optische bzw. akustische Wiedergabeeinrichtungen 120 sind in der Figur 2 beispielhaft das Anzeigeelement 122 und die Hörkapsel 124 beschrieben. Alternativ oder zusätzlich können auch Wiedergabeeinrichtungen 120 vorgesehen sein, deren Wiedergabewirkungen dem Benutzer über den Tastsinn zugänglich gemacht und die somit als haptische Wiedergabeeinrichtungen 120 angesehen werden können, insbesondere Vibrationseinrichtungen zur Signalisierung beispielsweise von eingehenden Telefonanrufen.

Nach Aktivierung der Wiedergabeeinrichtungen 120 durch die Steuereinheit 190 sind erste Informationen wiedergebbar, die in Abhängigkeit von zweiten, dritten oder von vierten Informationen erzeugt werden, wobei die zweiten Informationen mittels der Eingabeeinrichtungen 140 erzeugt werden und insbesondere die Zeicheninformationen umfassen, wobei die dritten Informationen im Speicher 192 gespeichert sind und wobei die vierten Informationen von der Empfangsvorrichtung 180 empfangen werden.

Auf dem Anzeigeelement 122 können beispielsweise zur Kontrolle der Richtigkeit der Zeicheninformationen 550 durch den Benutzer die Zeicheninformationen 550 angezeigt werden. Ebenso können Ergebnisse von Rechenoperationen auf dem Anzeigeelement 122 dargestellt werden. Dritte Informationen, insbesondere gespeicherte Telefonbuchinformationen, Adreßbuchinformationen, Terminkalenderinformationen und/oder Notizbuchinformationen werden auf dem Anzeigeelement 122 angezeigt. Vierte Informationen, insbesondere empfangene Kurznachrichten, beispielsweise SMS-Kurznachrichten, werden auf dem Anzeigeelement 122 angezeigt.
An der Hörkapsel 124 können akustische Signale hörbar gemacht werden, beispielsweise zur Korrektur der Informationseingabe durch Bewegungen des Telekommunikationsendgerätes 10 auf einer Oberfläche.

Weiterhin können von der Hörkapsel 124 sowohl in Abhängigkeit von dritten Informationen, beispielsweise zur Erinnerung an gespeicherte Termine und/oder Weckzeiten, als auch in Abhängigkeit von vierten Informationen, beispielsweise zur Signalisierung eines eingehenden Anrufes, hörbar gemacht werden.
Darüber hinaus können Informationen auch kombiniert auf mehreren Wiedergabeeinrichtungen 120 wiedergegeben werden. Beispielsweise kann die Erinnerung an einen Termin akustisch über die Hörkapsel 124 hörbar gemacht werden und gleichzeitig Ort und sachlicher Inhalt des Termins auf dem Anzeigeelement 122 angezeigt werden.

Nach Aktivierung der Sendevorrichtung 160 durch die Steuereinheit 190 werden fünfte Informationen in Abhängigkeit von zweiten Informationen, insbesondere Zeicheninformationen 550, von dritten Informationen und/oder von vierten Informationen gesendet.
In Abhängigkeit von Zeicheninformationen 550 können beispielsweise Rufsignale zu einem zweiten Telekommunikationsendgerät abgesetzt werden, die beispielsweise ein Telefongespräch initiieren oder auch dem Teilnehmer die Sendung einer Kurznachricht signalisieren. Fünfte Informationen können auch in Abhängigkeit von dritten Informationen gesendet werden. Beispielsweise kann ein Anruf an das zweite Telekommunikationsendgerät zu einem vorher gespeicherten Zeitpunkt gesendet werden.
In Abhängigkeit von vierten Informationen, beispielsweise zur Übertragung einer Kurznachricht empfangene Steuerinformationen, die von dem zweiten Telekommunikationsendgerät empfangen wurden, können fünfte Informationen an ein drittes Telekommunikationsendgerät gesendet werden.

In einer vorteilhaften Ausführungsform des Telekommunikationsendgerätes 10 enthält der der Steuereinheit 190 zugeordnete Speicher 192 Inhalte zur menügeführten Steuerung des Telekommunikationsendgerätes 10, insbesondere Daten zu verschiedenen Menüpunkten und dazugehörige Steuerbefehle. Menüinhalte und deren Darstellung auf den Wiedergabeeinrichtungen 120, insbesondere auf dem Anzeigeelement 122, können fest eingespeichert und unveränderlich und/oder programmierbar und änderbar vorgesehen sein. Die Änderung, Ersetzung oder Hinzufügung von Menüpunkten kann in Abhängigkeit von zweiten Informationen, insbesondere Zeicheninformationen 550 oder in Abhängigkeit von vierten Informationen erfolgen.

In einer weiteren vorteilhaften Ausführungsform des Telekommunikationsendgerätes 10 ist die Sendevorrichtung 160 und die Empfangsvorrichtung 180 derart ausgeführt, daß eine drahtlose Kommunikation, insbesondere nach dem GSM-Standard, betreibbar sind. Insbesondere ist das Telekommunikationsendgerät 10 zur Sprachkommunikation und/oder zum Austausch von Kurznachrichten, insbesondere SMS-Nachrichten, betreibbar.

In einer weiteren vorteilhaften Ausführungsform des Telekommunikationsendgerätes 10 umfaßt der der Steuereinheit 190 zugeordnete Speicher 192 Speicherkapazitäten zur Belegung mit persönlichen Daten eines Benutzers, insbesondere Adreßbuchdaten, Telefonbuchdaten, Termindaten und/oder Notizbuchdaten.

Das Telekommunikationsendgerät 10 umfaßt in einer weiteren vorteilhaften Ausführungsform eine der Steuereinheit 190 zugeordnete Recheneinheit, mit der Rechenoperationen in einem Rechnermodus des Telekommunikationsendgerätes 10 durchführbar sind.

In einer weiteren Ausführungsform umfaßt das Telekommunikationsendgerät 10 eine Uhr, die derart mit dem der Steuereinheit 190 zugeordneten Speicher 192 zusammenwirkt, daß Funktionen des Telekommunikationsendgerätes 10 in Abhängigkeit von dritten Informationen zu bestimmten Zeitpunkten, beispielsweise gespeicherten Termin- und/oder Weckzeitpunkten, aktivierbar sind.

## Patentansprüche

1. Telekommunikationsendgerät (10) mit Informationseingabeeinrichtungen (140), und mit einer Zeichenerkennungseinheit (240), wobei zweite Daten vorgesehen sind, die den zu erkennenden Zeichen entsprechen, **dadurch gekennzeichnet, dass** die Informationseingabeeinrichtungen (140) wenigstens ein Drucksensorelement (201, 202, 203) umfassen, dass das Telekommunikationsgerät dazu eingerichtet ist, dass das wenigstens eine Drucksensorelement (201, 202, 203) derart mit einem Druckaufnahmeelement (220) zusammenwirkt, dass Bewegungen des Druckaufnahmeelementes (220) auf einer Oberfläche von dem wenigstens einen Drucksensorelement (201, 202, 203) detektierbar sind, dass die von dem wenigstens einen Drucksensorelement (201, 202, 203) detektierten Bewegungen des Druckaufnahmeelementes (220) von der Zeichenerkennungseinheit (240) in Zeicheninformationen (550) umsetzbar ist, dass die Oberfläche durch Bewegung beschreibbar ist und dass die zweiten Daten erweiterbar sind, indem ein neu zu erkennendes Zeichen vollständig neu eingegeben wird, indem entsprechende Bewegungen mit dem Telekommunikationsendgerät (10) auf der Oberfläche ausgeführt werden.

2. Telekommunikationsendgerät (10) nach Patentanspruch 1, **dadurch gekennzeichnet, dass** das Telekommunikationsendgerät (10) eine Sendevorrichtung (160) umfasst, über die Signale in Abhängigkeit der Zeicheninformationen (550) absetzbar sind.

3. Telekommunikationsendgerät (10) nach Patentanspruch 1 oder 2, **dadurch gekennzeichnet, dass** das Telekommunikationsendgerät (10) Wiedergabeeinrichtungen (120) umfasst, dass die Informationseingabeeinrichtungen (140) Quittierungseinrichtungen (142), insbesondere Tasten, umfassen, wobei eingegebene Zeicheninformationen (550) von den Wiedergabeeinrichtungen (120), insbesondere optisch und/oder akustisch, darstellbar sind und mittels den Quittierungseinrichtungen (142) korrigierbar sind.

4. Telekommunikationsendgerät (10) nach einem der vorangehenden Patentansprüche, **dadurch gekennzeichnet, dass** das Druckaufnahmeelement (220) als Schreibspitze (222) ausgebildet ist.

5. Telekommunikationsendgerät (10) nach einem der vorangehenden Patentansprüche, **dadurch gekennzeichnet, dass** Eingabe- und Bedienfunktionen des Telekommunikationsendgerätes (10) in Abhängigkeit der Zeicheninformationen (550), insbesondere menügesteuert, aktivierbar sind.

6. Telekommunikationsendgerät (10) nach einem der vorangehenden Patentansprüche, **dadurch gekennzeichnet, dass** in Abhängigkeit der Zeicheninformationen (550) ein Funkmodus, insbesondere zur Sprachkommunikation und/oder zum Austausch von Kurznachrichten, insbesondere SMS-Nachrichten, aktivierbar und ebenfalls in Abhängigkeit der Zeicheninformationen (550), insbesondere zur Rufnummerneingabe, betreibbar ist.

7. Telekommunikationsendgerät (10) nach einem der vorangehenden Patentansprüche, **dadurch gekennzeichnet, dass** in Abhängigkeit der Zeicheninformationen (550) ein Speichermodus aktivierbar und ebenfalls in Abhängigkeit der Zeicheninformationen (550), insbesondere zum Eintragen von Telefon- und/oder Notizbucheintragungen in einen Speicher (192), betreibbar ist.

8. Telekommunikationsendgerät (10) nach einem der vorangehenden Patentansprüche, **dadurch gekennzeichnet, dass** in Abhängigkeit der Zeicheninformationen (550) ein Rechnermodus aktivierbar und betreibbar ist, wobei die Zeicheninformationen (550) im Telekommunikationsendgerät (10) verarbeitbar sind und Rechenergebnisse mittels der Wiedergabeeinrichtungen darstellbar sind.

9. Telekommunikationsendgerät (10) nach einem der vorangehenden Patentansprüche, **dadurch gekennzeichnet, dass** in Abhängigkeit der Zeicheninformationen (550) ein Weckermodus aktivierbar und betreibbar ist.

10. Telekommunikationsendgerät (10) nach einem der vorangehenden Patentansprüche, **dadurch gekennzeichnet, dass** eine Datenschnittstelle, insbesondere Infrarot- Schnittstelle, zur Übertragung von Daten vorgesehen ist.

## Claims

1. A telecommunication terminal (10) having information input devices (140) and a character recognition unit (240), wherein second data are provided corresponding to the characters to be detected, **characterized in that**, that the information input devices (140) comprise at least one pressure sensor element (201, 202, 203), that the telecommunication terminal is so arranged that, the at least one pressure sensor element (201, 202, 203) acting together with a pressure receiving element (220) in such a way that movements of the pressure recording element (220) on a surface are detectable by the at least one pressure sensor element (201, 202, 203), that the movements of the pressure receiving element (220) detected by the at least one pressure sensor element (201, 202, 203) are convertible by the character recognition unit (240) into character information (550), that on the surface it can be written by movements and that the second data are extendable such that a new character to be detected is newly entered in its entirety while corresponding movements are executed on the surface by the telecommunication terminal (10).

2. The telecommunication terminal (10) according to claim 1, **characterized in that** the telecommunication terminal (10) comprises a transmitting unit (160) by which signals can be transmitted subject to said character information (550).

3. The telecommunication terminal (10) according to claim 1 or 2, **characterized in that** the telecommunication terminal (10) comprises reproduction devices (120), that the data input devices (140) include acknowledgement devices (142), especially, keys, wherein the input character information (550) is presentable by the reproduction devices (120), especially optically and/or acoustically, and being correctable by the acknowledgement devices (142).

4. The telecommunication terminal (10) according to one of the preceding claims, **characterized in that** the pressure recording element (220) is formed as a writing tip (222).

5. The telecommunication terminal (10) according to one of the preceding claims, **characterized in that** the input and the operation functions of the telecommunication terminal (10) can be activated subject to character information (550), particularly, menu driven.

6. The telecommunication terminal (10) according to one of the preceding claims, **characterized in that**, that a radio mode can be activated subject to said character information (550), in particular, for voice communication and/or for the exchange of short messages, especially, SMS messages, and can be operated as well subject to said character information (550), in particular for the input of telephone numbers.

7. The telecommunication terminal (10) according to one of the preceding claims, **characterized in that** a storage mode can be activated subject to said character information (550), and can be operated as well subject to said character information (550), in particular, to enter telephone and/or notebook inputs into a memory (192).

8. The telecommunication terminal (10) according to one of the preceding claims, **characterized in that** a calculator mode can be activated and operated subject to said character information (550), wherein the character information (550) is processable in the telecommunication terminal (10) and the calculation results are displayable by the reproduction devices.

9. The telecommunication terminal (10) according to one of the preceding claims, **characterized in that** a wake up mode can be activated and operated subject to said character information (550).

10. The telecommunication terminal (10) according to one of the preceding claims, **characterized in that** a data interface, especially an infrared interface, is provided for data transmission.

## Revendications

1. Terminal de télécommunication (10) comprenant des dispositifs de saisie d'informations (140) et une unité de reconnaissance de caractères (240), deux données étant prévues, lesquelles correspondent aux caractères à reconnaître, **caractérisé en ce que** les dispositifs de saisie d'informations (140) comprennent au moins un élément de détection de pression (201, 202, 203), que le terminal de télécommunication est configuré à cet effet, que l'au moins un élément de détection de pression (201, 202, 203) interagit avec un élément d'enregistrement de pression (220) de telle sorte que les mouvements de l'élément d'enregistrement de pression (220) peuvent être détectés sur une surface de l'au moins un élément de détection de pression (201, 202, 203), que les mouvements de l'élément d'enregistrement de pression (220) détectés par l'au moins un élément de détection de pression (201, 202, 203) peuvent être convertis par l'unité de reconnaissance de caractères (240) en informations de caractère (550), qu'il est possible d'écrire sur la surface par un mouvement et que les deux données peuvent être étendues en ressaisissant entièrement un nouveau caractère à reconnaître en exécutant des mouvements correspondants sur la surface avec le terminal de communication (10).

2. Terminal de télécommunication (10) selon la revendication 1, **caractérisé en ce que** le terminal de télécommunication (10) comprend un dispositif émetteur (160) par le biais duquel peuvent être envoyés des signaux en fonction des informations de caractère (550).

3. Terminal de télécommunication (10) selon la revendication 1 ou 2, **caractérisé en ce que** le terminal de télécommunication (10) comprend des dispositifs de reproduction (120), que les dispositifs de saisie des informations (140) comprennent des dispositifs de validation (142), notamment des touches, les informations de caractère (550) saisies pouvant être représentées par les dispositifs de reproduction (120), notamment de manière visuelle et/ou sonore, et pouvant être corrigées au moyen des dispositifs de validation (142).

4. Terminal de télécommunication (10) selon l'une des revendications précédentes, **caractérisé en ce que** l'élément d'enregistrement de pression (220) est réalisé sous la forme d'un stylet (222).

5. Terminal de télécommunication (10) selon l'une des revendications précédentes, **caractérisé en ce que** les fonctions de saisie et de commande du terminal de télécommunication (10) peuvent être activées en fonction des informations de caractère (550), notamment commandées par un menu.

6. Terminal de télécommunication (10) selon l'une des revendications précédentes, **caractérisé en ce qu'**un mode de radiocommunication, notamment de communication vocale et/ou d'échange de messages courts, notamment de SMS, peut être activé en fonction des informations de caractère (550) et peut également être utilisé en fonction des informations de caractère (550), notamment pour la saisie d'un numéro d'appel.

7. Terminal de télécommunication (10) selon l'une des revendications précédentes, **caractérisé en ce qu'**un mode de mémorisation peut être activé en fonction des informations de caractère (550) et peut également être utilisé en fonction des informations de caractère (550), notamment pour saisir des entrées de répertoire téléphonique et/ou de carnet de notes dans une mémoire (192).

8. Terminal de télécommunication (10) selon l'une des revendications précédentes, **caractérisé en ce qu'**un mode de calcul peut être activé et utilisé en fonction des informations de caractère (550), les informations de caractère (550) pouvant être traités dans le terminal de télécommunication (10) et les résultats du calcul pouvant être représentés au moyen des dispositifs de reproduction.

9. Terminal de télécommunication (10) selon l'une des revendications précédentes, **caractérisé en ce qu'**un mode réveil peut être activé et utilisé en fonction des informations de caractère (550).

10. Terminal de télécommunication (10) selon l'une des revendications précédentes, **caractérisé en ce qu'**il est prévu une interface de données, notamment une interface infrarouge pour la transmission de données.
